# EUROPÄISCHE PATENTSCHRIFT

(11) **EP 1 416 224 B1**
(45) Veröffentlichungstag und Bekanntmachung des Hinweises auf die Patenterteilung: **31.12.2008**
(21) Anmeldenummer: 03450239.3
(22) Anmeldetag: 28.10.2003
(51) Int. Cl.: F23H 7/00, F23L 1/02, F23L 9/02, F23C 9/00, F23N 5/00, F23N 5/02

(54) **Verfahren zum Verbrennen von kleinstückeligem Brennstoff**
Method of combusting pellet fuel
Procedé de combustion d'un combustible sous forme de granules

(30) Priorität: 29.10.2002 AT 16312002
(43) Veröffentlichungstag der Anmeldung: 06.05.2004
(73) Patentinhaber: Wilde, Andreas, Ing., 4816 Gschwandt (AT); Coventina Privatstiftung, 4020 Linz (AT)
(72) Erfinder: Andreas Wilde, 4816 Gschwandt/Gmunden (AT)
(74) Vertreter: Hübscher, Helmut

(56) Entgegenhaltungen:
- EP-A- 0 427 231
- EP-A- 0 576 955
- WO-A-00/71937
- US-A- 4 495 872
- US-A- 5 241 916
- US-A- 5 279 234
- US-A- 5 606 924

## Beschreibung

Die Erfindung bezieht sich auf ein Verfahren zum Verbrennen von kleinstückeligem Brennstoff, der auf ein Glutbett auf einem Rost abgeworfen wird, der von unten über einen gemeinsamen Raum mit Primärluft beaufschlagt wird, wobei mit Hilfe der Abgase nach ihrer Nachverbrennung unter Sekundärluftzufuhr ein Wärmetauscher erwärmt wird.

Um bei einer Feuerung, bei der kleinstückeliger Brennstoff in einer vom Wärmebedarf abhängigen Menge dosiert mit Hilfe einer Wurfbeschickung im freien Flug auf einen Rost aufgebracht wird, vorteilhafte Verbrennungsbedingungen zu erreichen, ist es bekannt (AT 397 848 B), dem sich auf dem Rost bildenden Glutbett Primärluft durch den Rost zuzuführen, und zwar unter unterstöchiometrischen Bedingungen, um die Bildung von Stickoxiden im Glutbett möglichst klein zu halten. Die Nachverbrennung der Abgase aus dem Glutbett wird über eine Sekundärluftzufuhr gesteuert, die unabhängig von der Primärluftzufuhr in Abhängigkeit von der Kohlenmonoxidemission geregelt wird. Mit Hilfe einer solchen Luftführung konnten unter Bedingungen einer Wurfbeschickung kleinstückelige Brennstoffe, wie Hackschnitzel vorteilhaft schadstoffarm verbrannt werden. Werden jedoch biogene Brennstoffe, wie Reststoffe aus der Papierproduktion, Klärschlamm, stickstoffhältige Brennstoffe, beispielsweise Spanplatten, Altholz, Reststoffe aus der Landwirtschaft, Nebenprodukte aus der Zucker- und der Tabakindustrie u. dgl., eingesetzt, so kann die Schadstoffemission bei der Verfeuerung dieser Brennstoffe trotz der voneinander unabhängigen Regelung der Primär- und Sekundärluftzufuhr erheblich ansteigen

Um insbesondere für die Abfallverbrennung günstige Verbrennungsbedingungen zu schaffen, ist es bekannt (WO 00/71937 A1), den Rost in einzelne Feuerungsabschnitte zu unterteilen, die je für sich mit Primärluft und gegebenenfalls mit rückgeführten Abgasen zur Temperaturregelung in der Brennkammer beaufschlagt werden können. Das entlang des Rostes geförderte Brenngut durchläuft demnach nacheinander die einzelnen Feuerungsabschnitte, um zunächst getrocknet und dann unter jeweils einstellbaren Feuerungsbedingungen verbrannt zu werden. Die mit den Abgasen mitgerissenen, nicht bzw. nicht vollständig ausgebrannten Teilchen werden in einer Nachverbrennungsstrecke unter Zufuhr von Sekundärluft verbrannt, wobei wiederum Abgas zugeführt werden kann. Diese bekannte Feuerung eignet sich allerdings nicht für eine Wurfbeschickung, bei der die Brennstoffteilchen in Abhängigkeit von ihrer Masse unterschiedlich weit in die Brennkammer eingetragen werden, weil eine solche Wurfbeschickung einen einheitlichen Feuerungsbereich über den gesamten Rost voraussetzt.

Gleiches gilt für eine Feuerung (US 5 606 924 A), bei der zur Bestimmung der auf den Rost aufgebrachten Brennstoffmenge ein Radarsystem eingesetzt wird, das mit einer Infrarotkamera zusammenwirkt, mit deren Hilfe die Temperaturverteilung über das Glutbett überwacht werden kann, um feststellen zu können, ob eine unterschiedliche Temperaturverteilung auf eine unterschiedliche Dicke der Brennstoffschicht auf dem Rost oder auf unterschiedliche Heizwerte zurückgeführt werden müssen. Da zur Einflußnahme auf unterschiedliche Brennstoff- bzw. Heizwertverteilungen der Rost wiederum in einzelne je für sich mit Primärluft beaufschlagbare Feuerungsbereiche unterteilt werden muß, ist auch diese bekannte Feuerung für den Einsatz von Wurfbeschickungen ungeeignet.

Der Erfindung liegt somit die Aufgabe zugrunde, ein Verfahren zum Verbrennen von kleinstückeligem Brennstoff der eingangs geschilderten Art so weiterzubilden, daß auch beim Einsatz unterschiedlicher Brennstoffe eine schadstoffarme Verbrennung sichergestellt werden kann.

Die Erfindung löst die gestellte Aufgabe dadurch, daß ein Teil der im Wärmetauscher abgekühlten Abgase dem Glutbett durch den Rost in Abhängigkeit vom Gehalt der Abgase an Stickoxiden vor der Sekundärluftzufuhr und/oder von der Gluttemperatur zugeführt und ein weiterer Teil der abgekühlten Abgase den heißen Abgasen aus dem Glutbett vor der Sekundärluftzufuhr in Abhängigkeit von der vor der Sekundärluftzufuhr herrschenden Abgastemperatur zugemischt wird.

Die Erfindung geht von der Erkenntnis aus, daß über die Steuerung der Primärluftzufuhr zwar die sich mit dem Wärmebedarf ändernden Brennstoffmengen berücksichtigt werden können, nicht aber kurzfristige Heizwertschwankungen, die zu Schwankungen der Temperatur des Glutbettes Anlaß geben. Da erhöhte Temperaturen im Bereich des Glutbettes zu einer vermehrten Stickoxidbildung führen, wird erfindungsgemäß ein Teil der in einem Wärmetauscher abgekühlten Abgase rückgeführt und dem Glutbett durch den Rost zugeleitet, um unabhängig von solchen Heizwertschwankungen eine weitgehend gleichmäßige Temperatur des Glutbettes als Voraussetzung für eine Verminderung der Stickoxidemission sicherzustellen, ohne die insbesondere von der Brennstoffmenge und allenfalls von der gemessenen Feuchtigkeit des Brennstoffes abhängige Primärluftzufuhr nachteilig beeinflussen zu müssen. Die Abgasrückführung kann dabei in Abhängigkeit von der Temperatur des Glutbettes geregelt werden. Es ist aber auch möglich, für die Abgasrückführung zum Glutbett die Stickoxidkonzentration der Abgase aus dem Glutbett zu messen, weil es ja um die Minimierung der Stickoxidanteile geht.

Die Überwachung der Gluttemperatur bzw. der Stickoxidbildung im Glutbett reicht jedoch noch nicht für eine schadstoffarme Verbrennung der kleinstückeligen Brennstoffe aus, weil aufgrund der Wurfbeschickung die Abgastemperatur nicht nur von der Glutbettemperatur, sondern auch von der Trocknung und teilweisen Verbrennung des Brennstoffes während des freien Fluges abhängt, so daß auch oberhalb des Glutbettes mit schwankenden Abgastemperaturen gerechnet werden muß. Durch eine Abgasrückführung in Strömungsrichtung vor der Sekundärluftzufuhr kann die Abgastemperatur auf einen für die Unterdrückung der Stickoxidbildung vorteilhaft niedrigen Bereich gehalten werden, so daß die Sekundärluftzufuhr ausschließlich im Hinblick auf eine Unterdrückung der Kohlenmonoxidbildung geregelt werden kann. Damit gelingt eine vollständige, schadstoffarme Verbrennung kleinstückeliger Brennstoffe unterschiedlichen Heizwertes.

Zur Durchführung des Verbrennungsverfahrens kann von einer Vorrichtung mit einer Brennkammer, mit einer an die Brennkammer angeschlossenen Einrichtung zur Wurfbeschickung eines in der Brennkammer angeordneten, ein Glutbett aufnehmenden Rostes, mit einem von der Brennkammer ausgehenden, an einen Wärmetauscher angeschlossenen Abgaszug und mit Zuluftleitungen einerseits für Primärluft, die über einen gemeinsamen Raum von unten durch den Rost strömt, und anderseits für den Abgaszug in einer Nachverbrennungsstrecke zugeführte Sekundärluft ausgegangen werden. Es braucht lediglich die Brennkammer unter- und oberhalb des Rostes an Abgasrückleitungen angeschlossen zu werden, die über je ein Abgasgebläse mit dem Abgaszug auf der Austrittseite des Wärmetauschers in Strömungsverbindung stehen, so daß über das jeweilige Abgasgebläse die Abgasrückführung einerseits zum Rost und anderseits zur Brennkammer oberhalb des Rostes entsprechend geregelt werden kann. Die Regelung der Abgasrückleitung zum Glutbett erfolgt dabei in Abhängigkeit von der Temperatur des Glutbettes und/oder dem Gehalt der Abgase an Stickoxiden vor der Sekundärluftzufuhr. Das Abgasgebläse für die oberhalb des Rostes in der Brennkammer mündende Abgasrückleitung erfolgt im Sinne einer weitgehenden Konstanthaltung der Abgastemperatur vor der Sekundärluftzuführung.

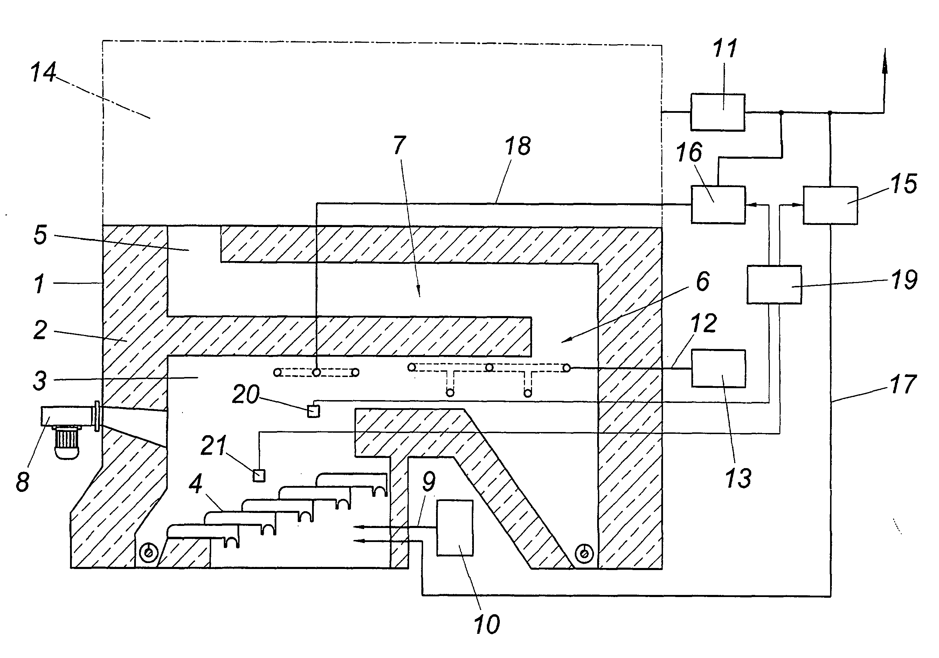

Anhand der Zeichnung wird das erfindungsgemäße Verfahren zum Verbrennen von kleinstückeligem Brennstoff näher erläutert, und zwar wird eine erfindungsgemäße Vorrichtung zum Verbrennen von kleinstückeligem Brennstoff in einem schematischen Längsschnitt gezeigt.

Die dargestellte Vorrichtung zum Verbrennen von kleinstückeligem Brennstoff, beispielsweise ein Heizkessel, weist ein Gehäuse 1 mit einer feuerfesten Auskleidung 2 auf, das eine Brennkammer 3 mit einem Rost 4 in Form eines für den Aschenaustrag beweglichen Treppenrostes bildet. An die Brennkammer 3 schließt ein Abgaszug 5 an, der eine Nachverbrennungsstrecke 6 mit einer anschließenden Ausbrandstrecke 7 umfaßt. Oberhalb des Rostes 4 mündet in die Brennkammer 3 eine Einrichtung 8 zur Wurfbeschickung. Diese Beschickungseinrichtung 8 ist mit einem über ein Förderrohr mit kleinstückeligem Brennstoff beschickbaren Schleuderrad versehen, mit dessen Hilfe der Brennstoff im freien Flug auf den Rost 4 bzw. auf das sich auf dem Rost 4 ausbildende Glutbett abgeworfen wird. Dabei ist darauf zu achten, daß über die Einrichtung 8 zur Wurfbeschickung des Rostes 4 keine Falschluft in die Brennkammer 3 gelangt.

Die für die Verbrennung des Brennstoffes auf dem Rost 4 erforderliche Verbrennungsluft wird als Primärluft in bekannter Weise über eine Zuluftleitung 9 der Brennkammer 3 unterhalb des Rostes 4 zugeführt, und zwar über ein Gebläse 10, das in Abhängigkeit von der über die Beschickungseinrichtung 8 zugeführten Brennstoffmenge unter Berücksichtigung des rechnerisch ermittelten Heizwertes des Brennstoffes so angesteuert wird, daß sich im Bereich des Glutbettes 4 eine zur Unterdrückung von Stickoxiden vorteilhafte unterstöchiometrische Verbrennung einstellt. Die heißen Abgase werden mit Hilfe eines Saugzuggebläses 11 aus der Brennkammer 3 durch den Abgaszug 5 abgezogen, um einer Nachverbrennung zugeführt zu werden. Zu diesem Zweck wird im Bereich der Nachverbrennungsstrecke 6 des Abgaszuges 5 den Abgasen über eine Zuluftleitung 12 Sekundärluft zugemischt, die unabhängig von der Primärluftzufuhr über ein gesondertes Gebläse 13 geregelt wird, und zwar in Abhängigkeit von der Kohlenmonoxidemission, die in herkömmlicher Art beispielsweise durch ein Lambdasonde überwacht wird. Am Ende der Ausbrandstrecke 7 ist die Verbrennung abgeschlossen. Die heißen, im wesentlichen sauerstofffreien Abgase strömen durch den angeschlossenen, strichpunktiert angedeuteten Wärmetauscher 14, um einen Wärmeträger im Wärmeaustausch zu erwärmen. Die im Wärmetauscher 14 abgekühlten Abgase werden dann nach einer Entstaubung über das Saugzuggebläse 11 durch einen Kamin ins Freie geblasen. Zum Unterschied zu herkömmlichen Vorrichtungen dieser Art wird jedoch ein Teil der abgekühlten Abgase über Abgasgebläse 15 und 16 in die Brennkammer 3 rückgeführt. Die Abgasrückleitung 17 des Abgasgebläses 15 führt unterhalb des Rostes 4 in die Brennkammer 3, während die an das Abgasgebläse 16 angeschlossene Abgasrückleitung 18 oberhalb des Rostes 4 in die Brennkammer 3 mündet, und zwar in Strömungsrichtung vor der Sekundärluftzufuhr. Mit Hilfe der rückgeführten, abgekühlten Abgase kann Einfluß auf die Temperatur des Glutbettes auf dem Rost 4 bzw. auf die dem Abgaszug 5 zuströmenden Abgase genommen werden, ohne das Sauerstoffangebot für die Verbrennung zu ändern, weil ja die Abgase am Ende der Ausbrandstrecke 7 im wesentlichen sauerstofffrei sind.

Zur Steuerung der Abgasgebläse 15 und 16 dient eine Steuereinrichtung 19, die einerseits an wenigstens einen Temperaturfühler 20 oberhalb des Rostes 4 zur Temperaturerfassung der aus dem Glutbett aufsteigenden Abgase und anderseits an wenigstens einen Meßfühler 21 angeschlossen ist, der die Temperatur des Glutbettes und/oder die Stickoxidemission aus dem Glutbett überwacht. Mit Hilfe des Meßfühlers 21 kann somit das Abgasgebläse 15 über die Steuereinrichtung 19 so angesteuert werden, daß die in die Brennkammer 3 unterhalb des Rostes 4 rückgeführten, abgekühlten Abgase für einen Ausgleich allfälliger Temperaturanstiege innerhalb des Glutbettes zufolge eines schwankenden Heizwertes des eingebrachten Brennstoffes mit der Wirkung sorgen, daß die Stickoxidemission klein gehalten werden kann. Die Rückführung kühler Abgase in die Brennkammer 3 oberhalb des Rostes 4 erlaubt eine gleichmäßige Abgastemperatur vor der Sekundärluftzufuhr, weil ja Temperaturschwankungen über den Temperaturfühler 20 erfaßt und über die Steuereinrichtung 19 zur Ansteuerung des Abgasgebläses 16 im Sinne einer Konstanthaltung der Abgastemperatur ausgeregelt werden können. Damit gelingt es, gleichbleibende Parameter für die Nachverbrennung unabhängig vom jeweiligen Heizwert des in die Brennkammer 3 eingebrachten Brennstoffes sicherzustellen, so daß die Sekundärluftzufuhr über das Gebläse 13 vorteilhaft im Sinne einer Unterdrückung von Kohlenmonoxid geregelt werden kann. Die Regelung der Gebläse 10 und 13 über entsprechende Meßfühler kann durch die Steuereinrichtung 19 in bekannter Weise vorgenommen werden, was jedoch aus Übersichtlichkeitsgründen nicht dargestellt ist.

## Patentansprüche

1. Verfahren zum Verbrennen von kleinstückeligem Brennstoff, der auf ein Glutbett auf einem Rost (4) abgeworfen wird, der von unten über einen gemeinsamen Raum mit Primärluft beaufschlagt wird, wobei mit Hilfe der Abgase nach ihrer Nachverbrennung unter Sekundärluftzufuhr ein Wärmetauscher (14) erwärmt wird, wobei ein Teil der im Wärmetauscher (14) abgekühlten Abgase dem Glutbett durch den Rost (4) in Abhängigkeit vom Gehalt der Abgase an Stickoxiden vor der Sekundärluftzufuhr und/oder von der Gluttemperatur zugeführt und ein weiterer Teil der abgekühlten Abgase den heißen Abgasen aus dem Glutbett vor der Sekundärluftzufuhr in Abhängigkeit von der vor der Sekundärluftzufuhr herrschenden Abgastemperatur zugemischt wird.

2. Vorrichtung zum Verbrennen von kleinstückeligem Brennstoff mit einer Brennkammer (3), mit einer an die Brennkammer (3) angeschlossenen Einrichtung (8) zur Wurfbeschickung eines in der Brennkammer (3) angeordneten, ein Glutbett aufnehmenden Rostes (4), mit einem von der Brennkammer (3) ausgehenden, an einen Wärmetauscher (14) angeschlossenen Abgaszug (5) und mit Zuluftleitungen (9, 12) einerseits für Primärluft, die über einen gemeinsamen Raum von unten durch den Rost (4) strömt, und anderseits für dem Abgaszug (5) in einer Nachverbrennungsstrecke (6) zugeführte Sekundärluft, wobei die Brennkammer (3) unter- und oberhalb des Rostes (4) an je eine Abgasrückleitung angeschlossen ist, wobei die unter- und oberhalb des Rostes (4) in die Brennkammer (3) mündenden Abgasrückleitungen (17, 18) über je ein Abgasgebläse (15, 16) mit dem Abgaszug (5) auf der Austrittsseite des Wärmetauschers (14) in Strömungsverbindung stehen und wobei das Abgasgebläse (15) für die unterhalb des Rostes (4) mündende Abgasrückleitung (17) in Abhängigkeit von der Temperatur des Glutbettes und/oder dem Gehalt der Abgase an Stickoxiden vor der Sekundärluftzufuhr und das Abgasgebläse (16) für die oberhalb des Rostes (4) mündende Abgasrückleitung (18) in Abhängigkeit von der Abgastemperatur vor der Sekundärluftzufuhr steuerbar sind.

## Claims

1. Method for burning fuel in small pieces which has been discharged onto a firebed on a grate (4) which is charged from beneath by primary air via a common chamber, wherein the exhaust gases are used after their post-combustion to heat a heat exchanger (14) using a supply of secondary air, wherein one portion of the exhaust gasses cooled in the heat exchanger (14) is supplied to the firebed through the grate (4) in dependence upon the nitrogen oxide content of the exhaust gases prior to the secondary air supply and/or upon the glow temperature and a further portion of the cooled exhaust gases is added to the hot exhaust gases from the firebed prior to the secondary air supply in dependence upon the prevailing exhaust gas temperature prior to the secondary air supply.

2. Device for burning fuel in small pieces having a combustion chamber (3), having an apparatus (8), attached to the combustion chamber (3), for spreader-feeding a grate (4) which is disposed in the combustion chamber (3) and receives a firebed, having an exhaust gas flue (5) which exits the combustion chamber (3) and is attached to a heat exchanger (14), and having air supply ducts (9, 12) on the one hand for primary air which flows from beneath through the grate (4) via a common chamber and on the other hand for secondary air supplied to the exhaust gas flue (5) in a post-combustion path (6), wherein the combustion chamber (3) is attached to a respective exhaust gas return line beneath and above the grate (4), wherein the exhaust gas return lines (17, 18) issuing into the combustion chamber (3) beneath and above the grate (4) are in flow communication with the exhaust gas flue (5) on the outlet side of the heat exchanger (14) in each case via an exhaust gas fan (15, 16), and wherein the exhaust gas fan (15) for the exhaust gas return line (17) issuing beneath the grate (4) can be controlled in dependence upon the temperature of the firebed and/or the nitrogen oxide content of the exhaust gases prior to the secondary air supply and the exhaust gas fan (16) for the exhaust gas return line (18) issuing above the grate (4) can be controlled in dependence upon the exhaust gas temperature prior to the secondary air supply.

## Revendications

1. Procédé de combustion d'un combustible se présentant sous forme de petits morceaux éjectés sur un lit incandescent se trouvant sur une grille (4), sollicitée par le dessous, par l'intermédiaire d'une enceinte commune, par de l'air primaire, où à l'aide des gaz d'échappement après leur postcombustion effectuée avec apport d'air secondaire, un échangeur de chaleur (14) est chauffé, une partie des gaz d'échappement refroidis dans l'échangeur de chaleur (14) étant amenée au lit incandescent, en passant à travers la grille (4), en fonction de la teneur en oxydes d'azote des gaz d'échappement, avant l'apport d'air secondaire, et/ou en fonction de la température d'incandescence, et une autre partie des gaz d'échappement refroidis étant ajoutée et mélangée aux gaz d'échappement chauds issus du lit incandescent, avant l'apport d'air secondaire, en fonction de la température des gaz d'échappement régnant avant l'apport d'air secondaire.

2. Dispositif de combustion d'un combustible se présentant sous forme de petits morceaux, avec une chambre de combustion (3), avec un dispositif (8) raccordé à la chambre de combustion (3), pour l'alimentation par projection d'une grille (4) disposée dans la chambre de combustion (3), supportant un lit incandescent, avec un parcours de gaz d'échappement (5) sortant de la chambre de combustion (3), raccordé à un échangeur de chaleur (14), et avec des conduites d'amenée d'air (9, 12), d'une part, pour l'air primaire, qui s'écoule en passant par une enceinte commune, en arrivant par le dessous, en traversant la grille (4), et, d'autre part, pour l'air secondaire amené au parcours des gaz d'échappement (5), en passant dans une veine de postcombustion (6), la chambre de combustion (3) étant raccordée, respectivement au-dessous et au-dessus de la grille (4) à une conduite de recirculation des gaz d'échappement, les conduites de recirculation des gaz d'échappement (17, 18) débouchant, au-dessous et au-dessus de la grille (4), dans la chambre de combustion (3), étant en liaison d'écoulement, par l'intermédiaire chaque fois d'une soufflante à gaz d'échappement (15, 16), avec le parcours des gaz d'échappement (5), du côté sortie de l'échangeur de chaleur (14), et la soufflante à gaz d'échappement (15), pour la conduite de recirculation des gaz d'échappement (17) débouchant au-dessous de la grille (4), étant susceptible d'être commandée en fonction de la température du lit incandescent et/ou de la teneur en oxydes d'azote des gaz d'échappement, avant l'apport d'air secondaire, et la soufflante à gaz d'échappement (16), pour la conduite de recirculation des gaz d'échappement (18) débouchant au-dessus de la grille (4), étant susceptible d'être commandée en fonction de la température des gaz d'échappement régnant avant l'apport d'air secondaire.
